# EUROPEAN PATENT SPECIFICATION

(11) **EP 2 384 840 B1**
(45) Date of publication and mention of the grant of the patent: **18.01.2017**
(21) Application number: 10735715.4
(22) Date of filing: 19.01.2010
(51) Int. Cl.: B23D 47/02, B23D 45/04

(54) **table cutting machine**
Tischschneidemaschine
machine de coupe sur table

(30) Priority: 30.01.2009 JP 2009019387
(43) Date of publication of application: 09.11.2011
(73) Proprietor: Makita Corporation, Anjo-shi, Aichi 446-8502 (JP)
(72) Inventor: AOYAMA Syuji, Anjo-shi Aichi 446-8502 (JP)
(74) Representative: Kramer Barske Schmidtchen Patentanwälte PartG mbB
(86) International application number: PCT/JP2010/050542
(87) International publication number: WO 2010/087246

(56) References cited:
- EP-A2- 2 145 711
- DE-A1-102006 059 753
- JP-A- 2 503 542
- JP-A- 5 185 318
- JP-A- 2005 279 934
- JP-A- 2008 100 356
- JP-A- 2008 272 893
- US-A- 5 868 054

## Description

### Technical Field

The present invention relates to a table cutting machine capable of operating a vertical movement of a main body of the cutting machine with respect to a material to be cut fixed on a table and capable of operating a slide movement of the main body in the direction of the surface of the table.

### Background Art

US 5,868,054 A discloses a portable saw table for a portable saw or router comprising a table base for supporting a workpiece, and a slide track support pivoted about a pivot axis to the table base. A slide is movable with respect to the support and slide tracks are mounted on the slide.

JP 3549732 B2 discloses a technology relating to a table cutting machine in which a main body of the cutting machine, which comprises a circular cutting blade to be rotated by use of an electric motor as a driving source, can be operated so as to be vertically moved and slid in the direction of the surface of a table. In accordance with this table cutting machine, a large size material can be cut by operating a downward movement of a main body of the cutting machine, and by cutting operation into a material to be cut by means of a rotary cutting blade, and further by operating a slide movement of the main body of the cutting machine in the direction of the surface of the table under the above condition.

Further, JP 2002-200601 A discloses a table cutting machine comprising slide mechanisms arranged in two stages in the vertical direction, which allows a main body of the cutting machine to slide in a long distance in the direction of the surface of a table, thereby cutting and processing a larger size material.

Further, JP 2005-279933 A discloses a table cutting machine in which a slide bar for supporting a slide is fixed to an upper part of a supporting arm standing upward from the vicinity of a rear part of a table so that the slide bar projects forward and in which a main body of the cutting machine is provided so as to be capable of operating a slide movement in the direction of the surface of the table with respect to the slide bar. In accordance with the table cutting machine, the slide bar is fixed so as to project forward from the upper part of the supporting arm, so that the slide bar does not project rearward from the supporting arm even under such a condition that the main body of the cutting machine is slid to a backward end position. This requires no rearward space. Therefore, the table cutting machine can be placed or kept closely to a wall, for example, which gives advantages that the space for installing the cutting machine can be compact and that handling performance in transportation etc. can be improved.

### Summary

### Problems to be solved

In accordance with the table cutting machine disclosed in JP 2005-279933 A, however, the slide bar is always fixed so as to project forward from the upper part of the supporting arm and extend over the material to be cut. Accordingly, the slide bar causes a hindrance to carry out a visual observation of the edge of a blade for fitting a corner line in a cutting operation. As a result, an operator is forced to take a look of the edge of the blade in an uncomfortable posture. This causes a problem that makes an operational performance of the table cutting machine to be deteriorated. Particularly in the case in which only one pair of a slide mechanism is used to obtain a long slide distance of a main body of the cutting machine for the purpose of corresponding to a large size material to be cut, the larger the slide distance is, the longer the slide bar becomes. Thus, an operational performance of the table cutting machine is further deteriorated.

In view of the above existing problems, the present invention is made for the purpose of compactifying a rearward installation space and obtaining a long slide distance of the main body of the cutting machine without obstructing a cutting operation.

### Means for solving the Problems

The above-mentioned object can be solved by providing a table cutting machine according to claim 1.

In accordance with a table cutting machine according to claim 1, at least one of the plurality of stages of slide mechanisms has a structure of a pattern 2 in which the slide guiding member is fixed with respect to a slide operation of the main body of the cutting machine backward and forward. Therefore, the slide guiding member, which extends in the backward and forward direction, does not move rearward even when the main body of the cutting machine is slid rearward (usually, in the direction of processing a cutting operation), thereby causing the slide guiding member not to project rearward. In this respect, no rearward installation space is required and a compactification of space can be achieved.

For example, a slide bar that is circular in cross section can be used as the slide guiding member, and a bearing (a slide bearing) for supporting the slide bar so as to be freely slidable can be used as the slide supporting member.

Further, the main body of the cutting machine is supported on the plurality of stages of slide mechanisms including the slide mechanism of the pattern 2 so as to be able to slide backward and forward. Accordingly, a long slide distance in the backward and forward direction can be obtained while the slide guiding member of the slide mechanism of the pattern 2 can be shortened. This ensures good visibility of the edge of a blade, thereby causing the slide guiding member not to obstruct a cutting operation.

In accordance with a table cutting machine according to claim 2, a length of rearward projection of the slide guiding member can be reduced when the main body of the cutting machine slides rearward.

In accordance with a table cutting machine according to claim 3, the upper stage slide mechanism does not project toward the front side (a user's side) of the rotational center of the cutting blade. Accordingly, the slide guiding member of the slide mechanism etc. may not obstruct an operation such as an operation of fitting of a corner line of an edge of a blade, and thus an operational performance of the table cutting machine can be further improved in this respect.

In accordance with a table cutting machine according to claim 4, the slide guiding member of the slide mechanism of the pattern 2 is provided on the left side of the main body of the cutting machine while an electric motor and a reduction gear train of the main body of the cutting machine are provided on the right side. Accordingly, lateral inclination angle of the main body of the cutting machine can be obtained equivalently in the lateral direction, and obtained more easily compared with a structure in which all of the slide guiding member, the electric motor, and the reduction gear train are provided on only one side of the left and right sides. Thus, an inclined cutting, which is carried out by inclining the main body of the cutting machine leftward or rightward, can be carried out at an inclination angle equivalent on the left and right sides. In this respect, an operational performance of the table cutting machine can be improved.

In accordance with a table cutting machine according to claim 5, a length of leftward projection of the slide guiding member can be made smaller compared with a structure in which the two slide bars are provided laterally parallel to each other. Thus, a large inclination angle of the main body of the cutting machine toward the left side can be obtained.

### Brief Description of the Drawings

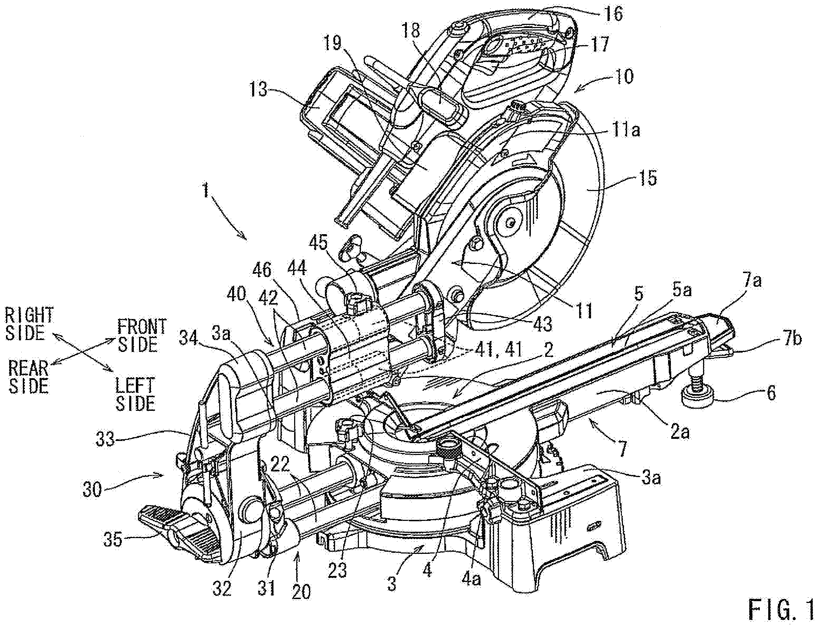

Fig. 1 is an overall perspective view of a table cutting machine.
   The figure shows the table cutting machine viewed obliquely from the left rear side. The figure shows a main body of the cutting machine that is upwardly located at a stand-by position. The figure shows slide positions of a main body of the cutting machine under a condition in which the slide position is located at a backward end position in a lower stage slide mechanism while the slide position is located at a middle position in an upper stage slide mechanism.
Fig. 2 is an overall side view of a table cutting machine. The figure shows the table cutting machine viewed from the left side. The figure shows a main body of the cutting machine that is upwardly located at a stand-by position. The figure shows slide positions of a main body of the cutting machine under a condition in which the slide positions are respectively located at forward end positions in both the upper stage and lower stage slide mechanisms.
Fig. 3 is an overall side view of a table cutting machine. The figure shows the table cutting machine viewed from the left side. Fig. 3 is different from Fig. 2 in that Fig. 3 shows a condition in which a main body of the cutting machine is downwardly located at a process position. Fig. 3 shows the slide positions under a condition in which the slide positions are located at forward end positions in both the upper stage and lower stage slide mechanisms, which is the same as in Fig. 2.
Fig. 4 is a front view of the table cutting machine, as viewed from the direction shown by an arrow (IV) in Fig. 3.
Fig. 5 is a side view of a table cutting machine. The figure shows a condition in which the main body of the cutting machine is downwardly located at a lower process position while the slide positions are located at backward end positions in both the upper stage and lower stage slide mechanisms.
Fig. 6 is a plan view of the table cutting machine, as viewed from the direction shown by an arrow (VI) in Fig. 5.
Fig. 7 is a right side view of the table cutting machine under a condition shown in Figs. 5 and 6, as viewed from the direction shown by an arrow (VII) in Fig. 6.
Fig. 8 is a left side view of a table cutting machine. Fig. 8 is different from Fig. 5 in that the main body of the cutting machine is upwardly located at a stand-by position. Fig. 8 shows the slide positions under a condition in which the slide positions are at backward end positions in both the upper stage and lower stage slide mechanisms, which is the same as in Fig. 5.

### Best Modes for carrying out the teachings

Next, an embodiment will be described on the basis of Figs.
1 to 8. Fig. 1 shows an overall view of a table cutting machine 1 in accordance with the embodiment. The table cutting machine 1 comprises a circular table 2 on which a material to be cut W is placed, a base 3 for supporting the table 2 so as to be freely rotatable, and a main body of the cutting machine 10 that can be tilted vertically above the table 2, as shown in Fig. 1.

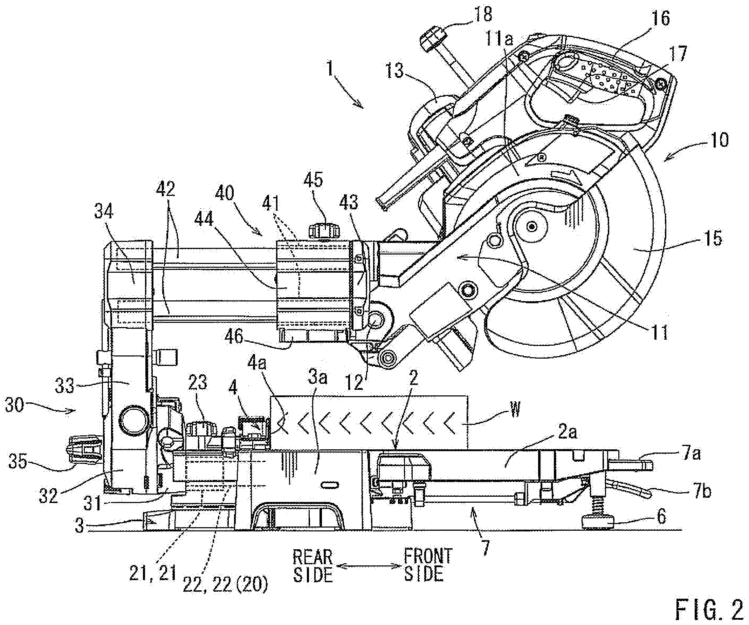

On both the left and right sides of the table 2, fixed table portions 3a and 3a are arranged. The both fixed table portions 3a and 3a are provided integral with both the left and right side of the base 3. The table 2 is supported on an upper surface of the base 3 between the both fixed table portions 3a and 3a. A positioning fence 4 for positioning a material to be cut is mounted so as to be cross over the both fixed table portions 3a and 3a. The positioning fence 4 is mounted between the both fixed table portions 3a and 3a with a slight gap between the positioning fence 4 and an upper surface (a surface on which a material to be cut is placed) of the table 2. The material to be cut W is brought into contact with a front surface (a positioning surface 4a) of the positioning fence 4 in order to position the material W in the direction of the surface of the table, as shown in Fig. 2. The positioning surface 4a of the positioning fence 4 pass through the rotational center of the table 2.

At a front part of the table 2, a table extension part 2a is provided for processing a large size material W. The table extension part 2a extends in the forward direction. A cutting edge plate 5 is mounted on an upper surface of the table extension part 2a from the vicinity of the rotational center of the table 2. The cutting edge plate 5 is provided with a long and narrow cutting edge 5a for leading the cutting blade. At a front end of the table extension part 2a, a leg part 6 is provided.

The main body of the cutting machine 10 is supported on a rear part of the table 2 through slide mechanisms 20 and 40 arranged in two stages in the vertical direction. A tilt supporting part 30 is provided between the upper stage and lower stage slide mechanisms 20 and 40.

The lower stage slide mechanism 20 includes a pair of right and left bearings 21 and 21 mounted to a lower surface of the table 2, and a pair of right and left slide bars 22 and 22. The two slide bars 22 and 22 are respectively supported through the bearings 21 so as to be freely slidable in the backward and forward direction. The both slide bars 22 and 22 project rearward from a rear part of the table 2. The both slide bars 22 and 22 are provided in parallel to each other. The both slide bars 22 and 22 are laterally provided at a predetermined interval in the right and left direction.

The right and left bearings 21 and 21 correspond to the slide supporting member while the right and left slide bars 22 and 22 correspond to the slide guiding member. The right and left bearings 21 and 21 corresponding to the slide supporting member are fixed to the table 2. The right and left slide bars 22 and 22 corresponding to the slide guiding member slide in the backward and forward direction. Accordingly, the lower stage slide mechanism 20 corresponds to a slide mechanism of a pattern 1 in which the slide guiding member (the slide bars 22 and 22) extending in the backward and forward direction moves backward and forward in accordance with a slide operation of the main body of the cutting machine 10 in the backward and forward direction while the slide supporting member (the bearings 21 and 21) does not move.

The slide position of the both slide bars 22 and 22 with respect to the table 2 can be fixed by screwing a fixing screw 23.

On the rear end parts of the both slide bars 22 and 22, a tilt supporting part 30 is supported. The tilt supporting part 30 includes a tilt supporting portion 31 and a tilt portion 32, which are rotatable about a rotational axis that is coincident with the upper surface of the table 2 from a lateral view and that passes through the rotational center of the table 2 from a planar view. The tilt supporting portion 31 is mounted to the rear end parts of the right and left slide bars 22 and 22. The tilt portion 32 is provided integral with a tilt arm portion 33. The tilt arm portion 33 extends in the upward direction. By rotating the tilt portion 32 with respect to the tilt supporting portion 31, the tilt arm portion 33 can be tilted in the leftward and rightward direction. A tilt position of the tilt arm portion 33 can be fixed by screwing a fixing lever 35.

The upper stage slide mechanism 40 is supported on an upper part of the tilt arm portion 33. The upper stage slide mechanism 40 includes two bearings 41 and 41 and two slide bars 42 and 42. Rear end parts of the two slide bars 42 and 42 can be fixed to a bar fixing part 34 provided in an upper part of the tilt arm portion 33. The two slide bars 42 and 42 extend in the forward direction from the bar fixing part 34. The both slide bars 42 and 42 extend in parallel to each other. Front end parts of the both slide bars 42 and 42 are fixed to each other through a bar connecting portion 43. The both slide bars 42 and 42 are longitudinally arranged at a predetermined interval in the vertical direction.

A slider 44 is supported on the both slide bars 42 and 42. Two bearings 41 and 41 are mounted in the slider 44. The slide bars 42 and 42 are respectively supported on the both bearings 41 and 41 so as to be freely slidable. In the upper stage slide mechanism 40, the upper and lower slide bars 42 and 42 correspond to the slide guiding member, which is extend in the backward and forward direction, while the two bearings 41 and 41 correspond to the slide supporting member. Accordingly, the upper stage slide mechanism 40 corresponds to a slide mechanism of a pattern 2 in which the slide guiding member (the slide bars 42 and 42) extending in the backward and forward direction does not move while the slide supporting member (the bearings 41 and 41) moves in the backward and forward direction in accordance with a slide operation of the main body of the cutting machine 10 in the backward and forward direction.

The slide position of the slider 44 with respect to the both slide bars 42 and 42 can be fixed by screwing a fixing screw 45.

The main body of the cutting machine 10 is supported on the slider 44 of the upper stage slide mechanism 40. A main body base 46 is mounted to a side part of the slider 44. A main body frame 11 of the main body of the cutting machine 10 is supported on the main body base 46 through a supporting shaft 12 so as to be vertically tiltable. A blade case 11a is provided in the front part of the main body frame 11.

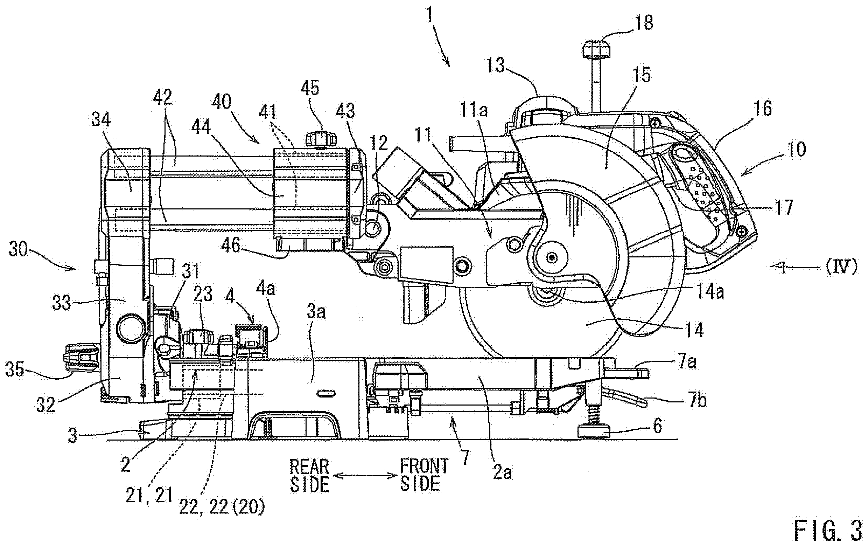

A driving motor 13 is mounted to a side part of the main body frame 11 through a reduction gear train 19. The driving motor 13 rotates a circular cutting blade 14. An upper half circumferential part of the cutting blade 14 is covered with the blade case 11a. A lower half circumferential part of the cutting blade 14 is covered with a movable cover 15, which can be opened and closed. The movable cover 15 is opened and closed in connection with a vertically tilting operation of the main body of the cutting machine 10. Under a condition in which the main body of the cutting machine 10 is upwardly located at the stand-by position as shown in Fig. 2, almost all the cutting blade 14 is covered with the blade case 11a and the movable cover 15. When the main body of the cutting machine 10 is operated to tilt downward, as shown in Fig. 3, the movable cover 15 is opened in connection with the operation, and thus, a lower part of the cutting blade 14 is exposed. A material to be cut W can be cut and processes by the exposed part of the cutting blade 14. By returning the main body of the cutting machine 10 upwardly to the stand-by position, the movable cover 15 can be closed in connection with the returning operation.

A loop-shaped handle portion 16 is provided above the main body frame 11. A trigger type switch lever 17 is provided on an inner circumferential side of the handle portion 16. Triggering the switch lever 17 by a user's finger causes the driving motor 13 to start, thereby rotating the cutting blade 14. A numeral 14a in the drawings denotes a part where the cutting blade 14 is mounted to a spindle that is rotated by the driving motor 13, and the 14a shows a rotational center.

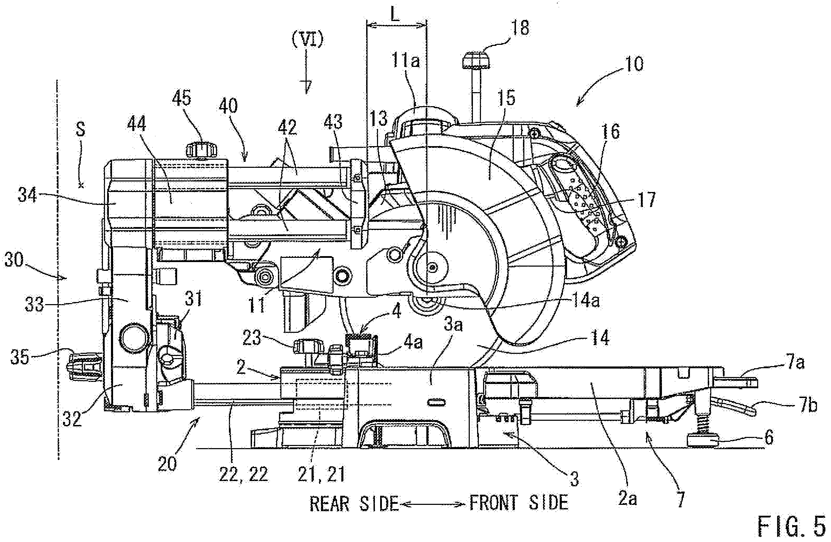

The length of projection of the both slide bars 42 and 42 in the forward direction (the length of the both slide bars 42 and 42) can be properly adjusted so that the position of the bar connecting part 43 for connecting the front end parts of the both slide bars 42 and 42 may not be located closely to the front side (a user's side) more than necessary. Accordingly, the bar connecting part 43 is always located on the rear side of the rotational center 14a of the cutting blade 14 over the slide range of the main body of the cutting machine 10, as shown in Fig. 5. This structure causes the upper stage slide mechanism 40 not to project in the forward direction. Fig. 5 shows a condition in which the main body of the cutting machine 10 is slid to the rear end side. Even under such a condition, the bar connecting part 43 of the upper stage slide mechanism 40 is located on the rear side by the distance L at the least apart from the rotational center 14a of the cutting blade 14.

As described above, the slide mechanism 40 is arranged not to be obstructive when the user looks into an edge of the blade (a part to be cut), for example. In this respect, a good visibility of an edge of the blade and an operational performance of the table cutting machine 1 can be improved.

Further, the handle portion 16 is provided with an illumination device 18. The illumination device 18 can illuminate a part to be cut and the vicinity of the part in order to provide convenience for the cutting operation in a dark place.

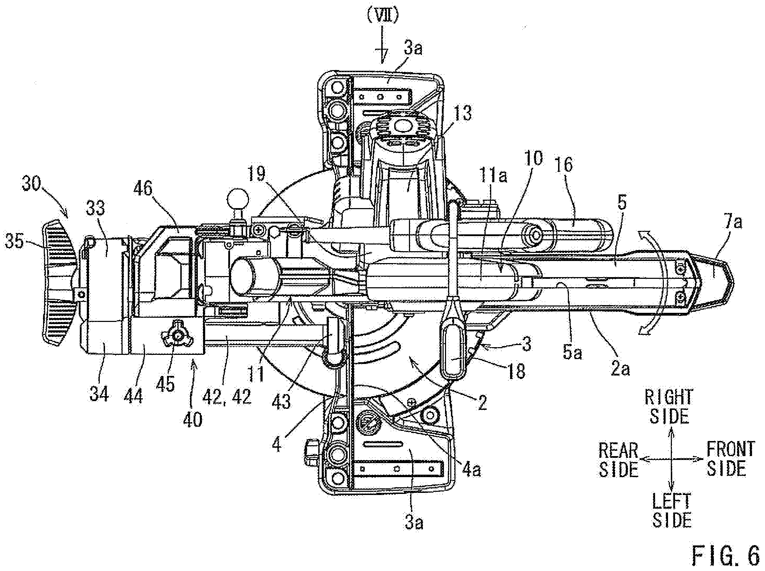

By horizontally rotating the table 2 at a certain angle in the leftward or the rightward direction as shown by a white arrow in Fig. 6, a so-called oblique cutting process can be made with regard to the material to be cut W. Under the table extension part 2a, there is provided a double table positioning mechanism 7 such as a positive block mechanism for positioning a rotational position of the table 2 at every constant angle and a stopper mechanism for positioning the rotational position of the table 2 at an arbitrary angle position. Levers 7a and 7b for releasing the table positioning mechanism 7 are provided in the front part of the table extension part 2a.

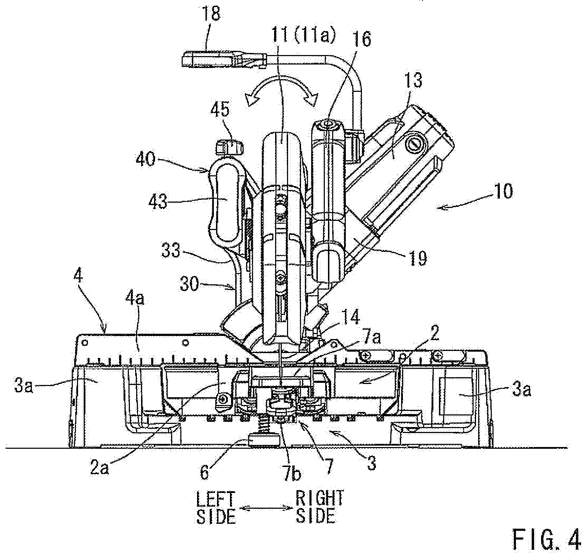

By using the inclination supporting part 30 to incline the main body of the cutting machine 10 at a certain angle in the leftward or the rightward direction with respect to the table 2 as shown by a white arrow in Fig. 4, a so-called inclination cutting process can be achieved. When the main body of the cutting machine 10 is tilted in the rightward direction, the driving motor 13 can be inclined at a large angle with no interference with the table 2, because the driving motor 13 faced obliquely downward is mounted to the main body frame 11 as shown in the drawing. Thus, the obliquely cutting process can be achieved with a large angle both on the right side and the left side. Further, a rightward over-hang load for the main body of the cutting machine 10 can be reduced, and thus the main body of the cutting machine 10 can be easily handled.

In accordance with the table cutting machine 1 having the structure described above, through the upper stage and lower stage slide mechanisms 20 and 40, the main body of the cutting machine 10 is supported on the table 2 on which the material to be cut W is placed. The main body of the cutting machine 10 can be moved for a long distance along the backward and forward direction through the upper stage and lower stage slide mechanisms 20 and 40, and thus a large size material to be cut W can be easily processed.

Further, the lower stage slide mechanism 20 includes the two slide bars 22 and 22, which extend in the backward and forward direction, and bearings 21 and 21 for supporting the slide bars 22 and 22 so as to be freely slidable in the backward and forward direction. By sliding the two slide bars 22 and 22 in the direction such that the two slide bars 22 and 22 project in the rearward direction, the main body of the cutting machine 10 can be slid in the rearward direction. The lower stage slide mechanism 20 corresponds to a slide mechanism of the pattern 1 since the slide bars 22 and 22, which are used as the slide guiding member and which extend in the backward and forward direction, move in the backward and forward direction, while the bearings 21 and 21, which are used as the slide supporting member for supporting the slide bars 22 and 22 so as to be relatively and freely slidable, are fixed to the table 2.

The upper stage slide mechanism 40 includes the two slide bars 42 and 42, which extend in the backward and forward direction, and the bearings 41 and 41 for supporting the slide bars 42 and 42 so as to be relatively and freely slidable in the backward and forward direction. The rear end parts of the two slide bars 42 and 42 are mounted to the bar fixing part 34 provided in the upper part of the tilt arm portion 33 so that the two slide bars 42 and 42 can extend in the forward direction. By sliding the slider 44 along the two slide bars 42 and 42 in the backward and forward direction, the main body of the cutting machine 10 can be slid in the backward and forward direction. The upper stage slide mechanism 40 corresponds to a slide mechanism of the pattern 2 since the slide bars 42 and 42, which are used as the slide guiding member and which extend in the backward and forward direction, are fixed to the bar fixing part 34 of the tilt arm portion 33 so as not to be slidable, while the bearings 41 and 41 are supported on the both slide bars 42 and 42 so as to be freely slidable in the backward and forward direction.

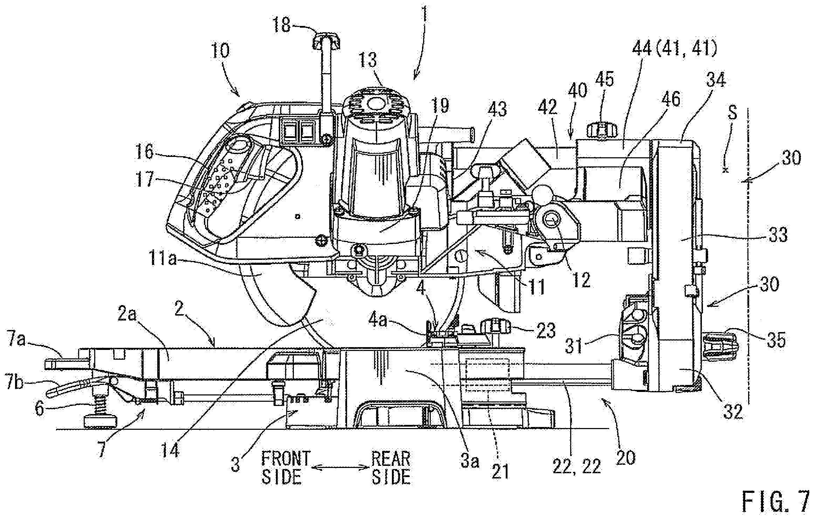

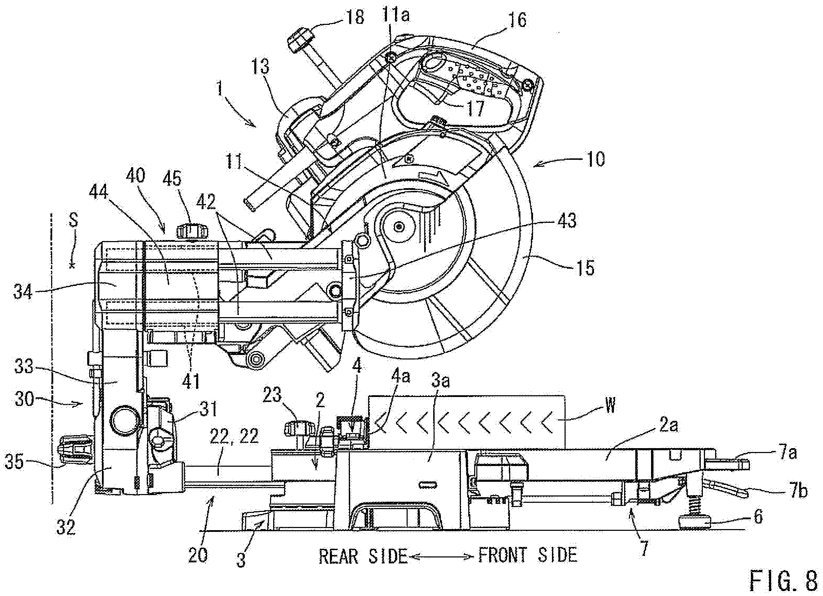

In this way, in the upper stage slide mechanism 40, the slide bars 42 and 42 are fixed in the direction of projecting forward from the bar fixing part 34 of the tilt arm portion 33. Accordingly, the slide bars 42 and 42 do not project in the rearward direction when the main body of the cutting machine 10 slides in the rearward direction. Thus, the rearward installation space S for installing the table cutting machine can be compactified, as shown in Figs. 5, 7 and 8.

Further, the upper stage and lower stage slide mechanisms 20 and 40 are arranged to obtain a long slide distance of the main body of the cutting machine 10. This structure allows the length in the backward and forward direction of the slide bar (the slide guiding member) in the slide mechanism of the pattern 2 to be made smaller than that in a structure in which the equivalent slide distance is obtained with only one slide mechanism. Accordingly, when a user tries to fit a corner line, for example, obstructions may be reduced to ensure good visibility of the edge of a blade, and thus an operational performance of the table cutting machine 1 can be improved in this respect. Especially in accordance with the exemplified embodiment, the length of the upper stage slide mechanism 40 (a position of the bar connecting part 43) can be set so that the front end part of the upper stage slide mechanism 40 (the bar connecting portion 43) can not project in the forward direction from the rotational center 14a of the cutting blade 14, and can be located by the distance L at the least apart from the center 14a over the whole slide range of the main body of the cutting machine 10. Thus, it is ensured that good visibility (the operational performance) can be obtained when a user looks into a cut position etc.

Further, the upper stage slide mechanism 40 is arranged on the left side of the cutting blade 14 viewed from a user, while the driving motor 13 and the reduction gear train 19 are arranged on the right side, as shown in Fig. 4. In the upper stage slide mechanism 40, by shortening the length of the both slide bars 42 and 42, a length of projection toward a user can be reduced, as described above. A right-handed user usually holds a handle portion 16 by his or her right hand and looks into an edge of the blade from the left side of the cutting blade 14 to carry out an operation such as a fitting operation of a corner line. From this point of respect, by providing the slide mechanism 40 of the pattern 2 on the left side of the cutting blade 14, and also providing the driving motor 13 and the reduction gear train 19 on the right side, it is ensured that an operational performance can be improved mainly when a right-handed user uses the table cutting machine 1.

In addition, in the upper stage slide mechanism 40, a structure in which the two slide bars 42 and 42 are longitudinally arranged allows a length of leftward projection of the slide mechanism 40 to be reduced, so that a leftward inclination angle of the main body of the cutting machine 10 can be set larger.

Various kinds of modification can be added to the embodiment described above. In the above description, there is exemplified a structure in which the slide mechanism 20 of the pattern 1 is provided on the lower side, while the slide mechanism 40 of the pattern 2 is provided on the upper side. However, contrary to the above, a structure may be that the slide mechanism of the pattern 2 is provided on the lower side while the slide mechanism of the pattern 1 is provided on the upper side, or that the slide mechanisms of the pattern 2 are provided on both the lower and upper sides, for example. By applying the slide mechanism of the pattern 2 in which the slide guiding member (the slide bar) is not moved in accordance with a slide operation of the main body of the cutting machine 10 in the backward and forward direction to one of the upper stage and lower stage slide mechanisms at the least, a compactification of the rearward installation space can be obtained.

Further, there is exemplified a structure of the upper stage slide mechanism 40 of the pattern 2 in which the two slide bars 42 and 42 are longitudinally provided. However, the two slide bars 42 and 42 may be laterally arranged, which is similar to those of the lower stage slide mechanism. The two slide bars in each of the slide mechanism may be optionally provided longitudinally or laterally. The number of the slide bars in each of the slide mechanism may not be limited to two, and the number may be one, or three or more.

Further, there is exemplified the slide mechanisms 20 and 40 arranged in two stages in the vertical direction. However, a structure may be adopted in which the main body of the cutting machine is supported on the table through three-stage slide mechanism, or a structure in which the main body of the cutting machine is supported on the table through plurality of slide mechanisms in a lateral direction. Even in these cases, by applying the slide mechanism of the pattern 2 to at least one pair of the slide mechanism, a similar operational effect can be obtained.

## Claims

1. A table cutting machine, comprising:
a table (2) for placing a material to be cut; and
a main body of the cutting machine arranged such that the main body can be operated to move vertically above the table (2);
wherein the main body of the cutting machine comprises a cutting blade (14);
wherein the main body of the cutting machine is supported on a rear part of the table (2) through a plurality of slide mechanisms (20, 40) such that the main body of the cutting machine can be slidable in the backward and forward direction along the direction of the surface of the table (2);
wherein each of the slide mechanism (20, 40) includes a slide guiding member (22, 42) extending in the backward and forward direction and a slide supporting member (21, 41) supporting the slide guiding member (22, 42);
wherein there are arranged a slide mechanism (20) of the plurality of the slide mechanisms which is of pattern 1 in which the slide guiding member (22) moves in the backward and forward direction when the main body of the cutting machine is slid in the backward and forward direction while the slide supporting member (21) is fixed, and a slide mechanism (40) of the plurality of slide mechanisms which is of pattern 2 in which the slide supporting member (41) moves in the backward and forward direction when the main body of the cutting machine is slid in the backward and forward direction while the slide guiding member (42) is fixed with respect to the slide operation of the main body of the cutting machine;
wherein an upper stage slide mechanism (40) and a lower stage slide mechanism (20) are arranged in the vertical direction as the plurality of the slide mechanisms (20, 40); and
wherein the length of the upper stage slide mechanism is set so that a front end part of the upper stage slide mechanism cannot project in the forward direction from a rotational center (14a) of the cutting blade (14).

2. The table cutting machine according to claim 1, wherein the upper stage slide mechanism (40) being of the pattern 2.

3. The table cutting machine according to claim 2, wherein a rotational center of the cutting blade (14) of the main body of the cutting machine is located on a front side of the slide guiding member (42) of the upper stage slide mechanism (40) over a slide range in the backward and forward direction of the main body of the cutting machine.

4. The table cutting machine according to claim 2 or 3, wherein when the main body of the cutting machine is viewed from the front side, the upper stage slide mechanism (40) is arranged on a left side of the cutting blade (14) of the main body of the cutting machine, while a reduction gear train (19) and an electric motor (13) that is used as a driving source for rotating the cutting blade (14) are arranged on a right side of the main body of the cutting machine.

5. The table cutting machine according to any one of claims 2 to 4, wherein the upper stage slide mechanism (40) includes two slide bars (42) as the slide guiding member (42), the two slide bars (42) being vertically provided parallel to each other.

## Patentansprüche

1. Tischschneidemaschine, mit
einem Tisch (2) zum Platzieren eines zu schneidenden Materials, und
einem Hauptkörper der Schneidemaschine, der so angeordnet ist, dass der Hauptkörper zum vertikalen Bewegen oberhalb des Tisches (2) betätigt werden kann,
bei der der Hauptkörper der Schneidemaschine ein Schneideblatt (14) aufweist,
bei der der Hauptkörper der Schneidemaschine an einem hinteren Teil des Tisches (2) durch eine Mehrzahl von Gleitmechanismen (20, 40) gelagert ist, so dass der Hauptkörper der Schneidemaschine in der Rückwärts-Vorwärts-Richtung entlang der Richtung der Oberfläche des Tisches (2) gleitbar ist,
bei der jeder von den Gleitmechanismen (20, 40) ein Gleitführungsbauteil (22, 42), das sich in der Rückwärts-Vorwärts-Richtung erstreckt, und ein Gleitlagerungsbauteil (21, 41) aufweist, das das Gleitführungsbauteil (22, 42) lagert,
bei der ein Gleitmechanismus (20) der Mehrzahl der Gleitmechanismen angeordnet ist, der von Muster 1 ist, bei welchem sich das Gleitführungsbauteil (22) in der Rückwärts-Vorwärts-Richtung bewegt, wenn der Hauptkörper der Schneidemaschine in der Rückwärts-Vorwärts-Richtung verschoben wird, während das Gleitlagerungsbauteil (21) fixiert ist, und ein Gleitmechanismus (40) der Mehrzahl von Gleitmechanismen angeordnet ist, der von Muster 2 ist, bei welchem sich das Gleitlagerungsbauteil (41) in der Rückwärts-Vorwärts-Richtung bewegt, wenn der Hauptkörper der Schneidemaschine in der Rückwärts-Vorwärts-Richtung verschoben wird, während das Gleitführungsbauteil (42) in Bezug auf die Gleitbetätigung des Hauptkörpers der Schneidemaschine fixiert ist,
bei der ein Gleitmechanismus (40) einer oberen Stufe und ein Gleitmechanismus (20) einer unteren Stufe in der vertikalen Richtung als die Mehrzahl der Gleitmechanismen (20, 40) angeordnet sind, und
bei der die Länge des Gleitmechanismus der oberen Stufe so festgelegt ist, dass ein vorderer Endteil des Gleitmechanismus der oberen Stufe nicht in der Richtung nach vorne von einem Drehzentrum (14a) des Schneideblattes (14) vorstehen kann.

2. Tischschneidemaschine nach Anspruch 1, bei der der Gleitmechanismus (20) der oberen Stufe von Muster 2 ist.

3. Tischschneidemaschine nach Anspruch 2, bei der sich ein Drehzentrum des Schneideblattes (14) des Hauptkörpers der Schneidemaschine an einer vorderen Seite des Gleitführungsbauteils (42) des Gleitmechanismus (40) der oberen Stufe über einen Gleitbereich in der Rückwärts-Vorwärts-Richtung des Hauptkörpers der Schneidemaschine befindet.

4. Tischschneidemaschine nach Anspruch 2 oder 3, bei der, wenn der Hauptkörper der Schneidemaschine von der vorderen Seite gesehen wird, der Gleitmechanismus (40) der oberen Stufe an einer linken Seite des Schneideblattes (14) des Hauptkörpers der Schneidemaschine angeordnet ist, während ein Untersetzungsgetriebezug (19) und ein elektrischer Motor (13), der als eine Antriebsquelle für das Drehen des Schneideblattes (14) verwendet wird, an einer rechten Seite des Hauptkörpers der Schneidemaschine angeordnet sind.

5. Tischschneidemaschine nach einem der Ansprüche 2 bis 4, bei der der Gleitmechanismus (40) der oberen Stufe zwei Gleitstäbe (42) als das Gleitführungsbauteil (42) enthält, bei der die zwei Gleitstäbe (42) vertikal parallel zueinander vorgesehen sind.

## Revendications

1. Machine de coupe sur table comprenant :
une table (2) pour placer un matériau à couper ; et
un corps principal de la machine de coupe agencé de sorte que le corps principal puisse être actionné pour se déplacer verticalement au-dessus de la table (2) ;
dans lequel le corps principal de la machine de coupe comprend une lame de coupe (14) ;
dans lequel le corps principal de la machine de coupe est supporté sur une partie arrière de la table (2) par une pluralité de mécanismes coulissants (20, 40) de sorte que le corps principal de la machine de coupe puisse être coulissant dans la direction arrière et avant le long de la direction de la surface de la table (2) ;
dans lequel chacun du mécanisme coulissant (20, 40) comprend un élément de guidage coulissant (22, 42) s'étendant dans la direction arrière et avant et un élément de support coulissant (21, 41) supportant l'élément de guidage coulissant (22, 42) ;
dans lequel sont agencés un mécanisme coulissant (20) de la pluralité des mécanismes coulissants qui est du type 1, dans lequel l'élément de guidage coulissant (22) se déplace dans la direction arrière et avant lorsque le corps principal de la machine de coupe est coulissé dans la direction arrière et avant alors que l'élément de support coulissant (21) est fixé, et un mécanisme coulissant (40) de la pluralité de mécanismes coulissants qui est du type 2, dans lequel l'élément de support coulissant (41) se déplace dans la direction arrière et avant lorsque le corps principal de la machine de coupe est coulissé dans la direction arrière et avant alors que l'élément de guidage coulissant (42) est fixé par rapport à l'opération de coulissement du corps principal de la machine de coupe ;
dans lequel un mécanisme coulissant d'étage supérieur (40) et un mécanisme coulissant d'étage inférieur (20) sont agencés dans la direction verticale comme la pluralité des mécanismes coulissants (20, 40) ; et
dans lequel la longueur du mécanisme coulissant d'étage supérieur est réglée de sorte qu'une partie d'extrémité avant du mécanisme coulissant d'étage supérieur ne puisse pas dépasser dans la direction avant depuis un centre rotatif (14a) de la lame de coupe (14).

2. Machine de coupe sur table selon la revendication 1, dans laquelle le mécanisme coulissant d'étage supérieur (40) est du type 2.

3. Machine de coupe sur table selon la revendication 3, dans laquelle un centre rotatif de la lame de coupe (14) du corps principal de la machine de coupe est situé sur un côté avant de l'élément de guidage coulissant (42) du mécanisme coulissant d'étage supérieur (40) sur une étendue coulissante dans la direction avant et arrière du corps principal de la machine de coupe.

4. Machine de coupe sur table selon la revendication 2 ou 3, dans laquelle lorsque le corps principal de la machine de coupe est vu depuis le côté avant, le mécanisme coulissant d'étage supérieur (40) est agencé sur un côté gauche de la lame de coupe (14) du corps principal de la machine de coupe, alors qu'un train d'engrenage de réduction (19) et un moteur électrique (13), qui est utilisé comme source d'entraînement pour la rotation de la lame de coupe (14), sont agencés sur un côté droit du corps principal de la machine de coupe.

5. Machine de coupe sur table selon l'une quelconque des revendications 2 à 4, dans laquelle le mécanisme coulissant d'étage supérieur (40) comporte deux barres coulissantes (42) comme élément de guidage coulissant (42), les deux barres coulissantes (42) étant prévues verticalement parallèlement l'une à l'autre.
